# DEMANDE DE BREVET EUROPEEN

(11) **EP 0 575 258 A1**
(43) Date de publication de la demande: **22.12.1993**
(21) Numéro de dépôt: 93401565.2
(22) Date de dépôt: 18.06.1993
(51) Int. Cl.: H02G 15/117

(54) **Dispositif de raccordement et de protection de câbles**

(30) Priorité: 19.06.1992 FR 9207474
(71) Demandeur: Morizot, Jean-Guy, F-75016 Paris (FR)
(72) Inventeur: Morizot, Jean-Guy, F-75016 Paris (FR)
(74) Mandataire: Viard, Jean

(57) **Abrégé**

Dispositif de raccordement et de protection des raccordements de câbles, notamment de télécommunications. Les connexions sont effectuées, paire par paire, dans des modules de connexion qui sont ensuite disposés sur un plateau, articulé à l'intérieur d'une coquille refermée d'une manière étanche.

## Description

La présente invention a pour objet un dispositif de raccordement et de protection de câbles destiné en particulier, mais non exclusivement, aux câbles de distribution des télécommunications incluant un grand nombre de paires de conducteurs électriques.

La réalisation d'épissures sur de tels câbles est une opération extrêmement courante qui est rendue nécessaire par une longueur limitée du câble pouvant être enroulé sur une bobine, mais également lorsqu'il s'agit de distribuer un ensemble de conducteurs dans des directions différentes. Malheureusement, de telles connexions doivent le plus souvent être effectuées sur le site dans des fosses ce qui rend le travail malaisé, d'autant plus qu'elles font appel à des petits connecteurs séparés qui doivent être régulièrement répartis sur toute la longueur de l'épissure.

Après avoir réalisé et testé les différentes connexions, il est bien entendu nécessaire de protéger l'épissure . Jusqu'à ce jour, les fonctions de connexion et de protection étaient réalisées par des moyens différents.

Une autre difficulté résulte de la nécessité de réaliser des connexions par paires de conducteurs en raison des contraintes dues aux télécommunications.

US-A- 3 701 835 décrit un dispositif de raccordement destiné à des conducteurs aériens. Le câble multiconducteurs est monté, après coupure ou dénudage, dans une coquille constitué de deux demi-coquille articulées l'une sur l'autre, dans laquelle il est maintenu. Les connexions sont effectuées conducteur par conducteur, les fils de dérivation étant guidés par une grille. Mais le travail de connexion reste classique.

EP-A- 0 320 189, divulgue également un boîtier aérien de protection d'épissures comprenant des demi-coquille articulées l'une sur l'autre pour pouvoir s'ouvrir ou se fermer. A nouveau, les connexions sont réalisées de manière classique.

La présente invention a pour objet de pallier cet inconvénient et de permettre un travail relativement aisé dans des conditions généralement difficiles , avec des risques d'erreurs de branchement pratiquement nulles.

Selon l'invention, le dispositif de raccordement et de protection de câbles comprenant, une coquille, constituée de deux demi-coquille articulées l'une sur l'autre, fermée à ses deux extrémités par des flasques , est caractérisé en ce qu'il inclût au moins un plateau fixé sur la demi-coquille inférieure recevant des modules de connexion , chaque module recevant une pluralité de connecteurs dans lesquels sont introduites des paires de fils conducteurs des câbles à raccorder.

Le dispositif de raccordement et de protection de câbles comprend, à l'intérieur d'une coquille translucide, au moins un plateau à deux niveaux préorganisés recevant des modules de connexion qui réalisent ainsi un tableau de raccordement, intégré à la coquille de protection, les connexions étant régulièrement réparties dans le volume de la coquille.

La coquille est constituée de deux demi-coquille articulées l'une sur l'autre le long d'une génératrice pouvant se fermer d'une manière étanche, terminée par des embouts tronconiques à l'intérieur desquels les câbles d'entrée et de sortie sont immobilisés par injection d'une mousse plastique.

Le ou les plateaux sont munis de connecteurs assurant le dénudage et le sertissage automatique des conducteurs en une seule opération et permettant des mesures directes, non destructives, électriques et phoniques.

L'invention permet le raccordement et la protection d'épissures droites ou de divisions dans toutes les configurations. Il est possible de repérer immédiatement le sens de raccordement avec une grande facilité . Par ailleurs, toutes les épissures réalisées ont exactement la même configuration, seul le nombre de connecteurs variant avec les besoins.

D'autres caractéristiques et avantages de l'invention apparaîtront au cours de la description qui va suivre de modes particuliers de réalisation donnés à titre d'exemples non limitatifs en regard des figures qui représentent :
- La figure 1, une vue en perspective du dispositif;
- la figure 2, une vue de l'organisation interne de la coquille;
- la figure 3, une vue d'un module de connecteurs;
- la figure 4, une vue d'un embout;
- la figure 5, une vue d'un dispositif en position après montage;
- la figure 6, une variante de réalisation de montage des plateaux.

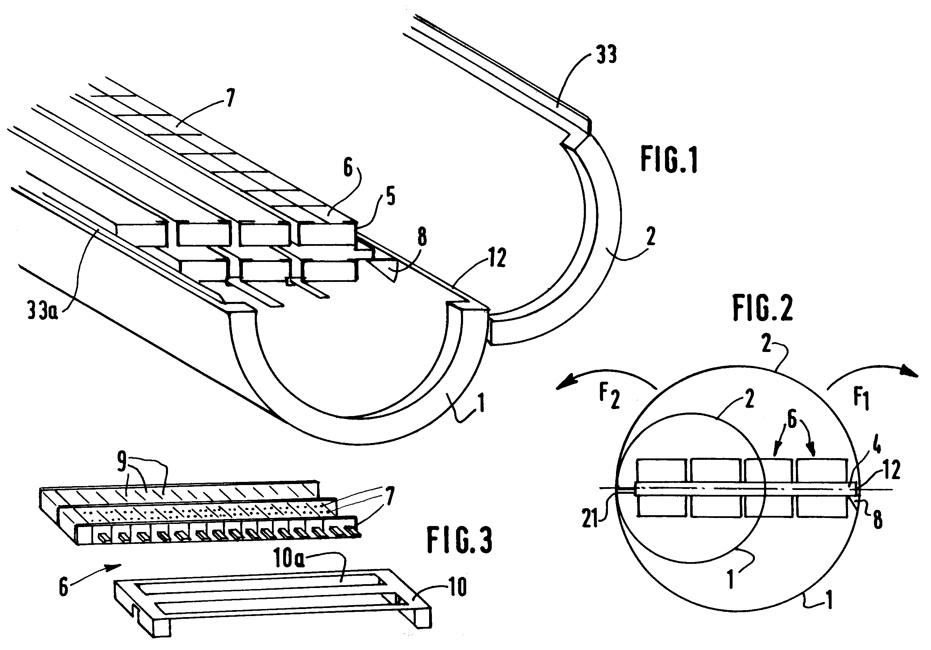

Sur la figure 1, on voit que le dispositif comprend deux demi coquilles 1, 2, réunies par une charnière 12. La coquille inférieure 1 comprend un plateau de câblage 3 constitué de trois rails 4 sur lesquels viennent glisser les pièces 5 de maintien des modules 6.

Les modules 6 servent à recevoir les connecteurs 7 qui dans l'exemple représenté sont au nombre de vingt huit, en deux rangées de quatorze, ce qui en cas de division permet le passage aisé des conducteurs.

Le plateau de câblage ainsi constitué est lui-même articulé sur la demi-coquille inférieure 1 par une bande souple 21, formant charnière, comme cela apparaît sur la figure 2.

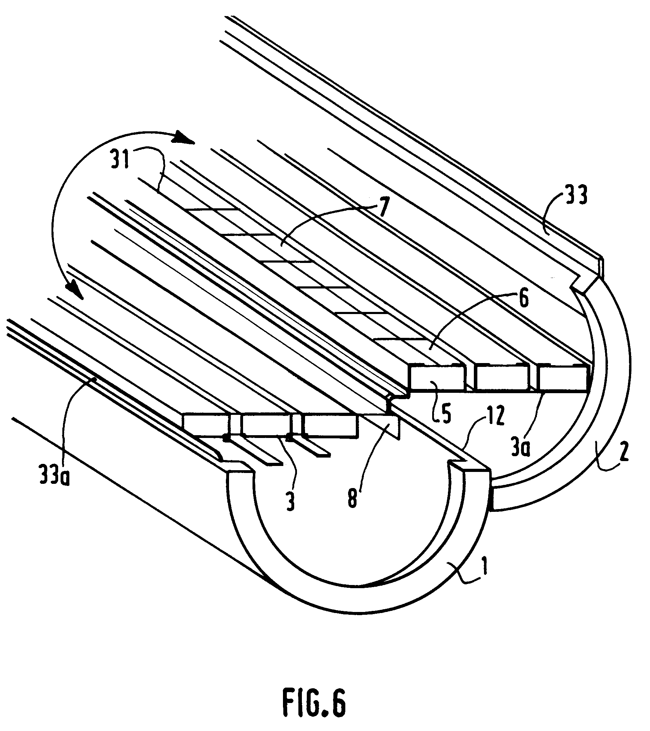

Dans l'exemple représenté, le plateau reçoit deux niveaux de connecteurs qui peuvent pivoter de 180° ce qui permet l'accès aux deux faces. L'espace compris entre les deux niveaux permet le passage d'une nappe de fils conducteurs. Mais, dans certains cas, un seul niveau de connecteurs peut être suffisant et le plateau 3 peut alors être fixé sur la coquille inférieure. il est aussi possible, comme représenté sur la figure 6 de monter un plateau fixe 3 dans la demi coquille inférieure et un plateau 3a articulé sur un bord du plateau fixe 3, par une charnière 31, le plateau 3a pouvant pivoter dans le sens horaire pour dégager la surface supérieure du plateau 3.

La figure 2 représente le cas où la coquille renferme huit modules, le nombre des modules étant déterminé par la capacité des câbles à connecter. Bien entendu, le diamètre de la coquille varie en fonction du nombre de modules. Pour quatre modules, le diamètre peut être de 60 mm et pour six modules de 100 mm. Le plateau 3 repose sur un appui ou support 8. Les deux demi-coquille s'ouvrent dans le sens de la flèche F1 et le plateau 4 dans celui de la flèche F2. L'ensemble reste toujours monobloc.

La figure 3 représente en perspective un module 6 qui, comme indiqué précédemment, est constitué par un support dans lequel viennent s'encastrer une multiplicité de connecteurs 7, chaque connecteur assurant la continuité d'une paire de conducteurs avec la paire correspondante.

Par un système de contact auto-dénudant (CAD), en soi connu, le technicien doit seulement introduire les fils des deux paires dans les quatre trous du connecteur et pousser ceux-ci dans les logements prévus pour que les fils soient coupés par des lames, et dénudés à des endroits déterminés ce qui établit les contacts nécessaires.

Grâce à l'articulation du plateau, le technicien a facilement accès aux deux faces de celui-ci, et aux points de test 9 . Le module est refermé, après câblage par un couvercle 10 présentant deux ouvertures longitudinales 10a de passage des fils.

L'étanchéité de l'intérieur de la coquille est assurée, comme cela apparaît sur la figure 1 par un joint 33 faisant saillie sur le bord de la demi-coquille 2, opposé à la charnière 12, le joint 33 pénétrant dans une gorge 33a de la demi-coquille 1. La coquille peut ainsi être réouverte dans un but d'intervention, de modification ou de contrôle.

Mais bien entendu, les câbles ,entrant et sortant, doivent être immobilisés par rapport à la coquille.

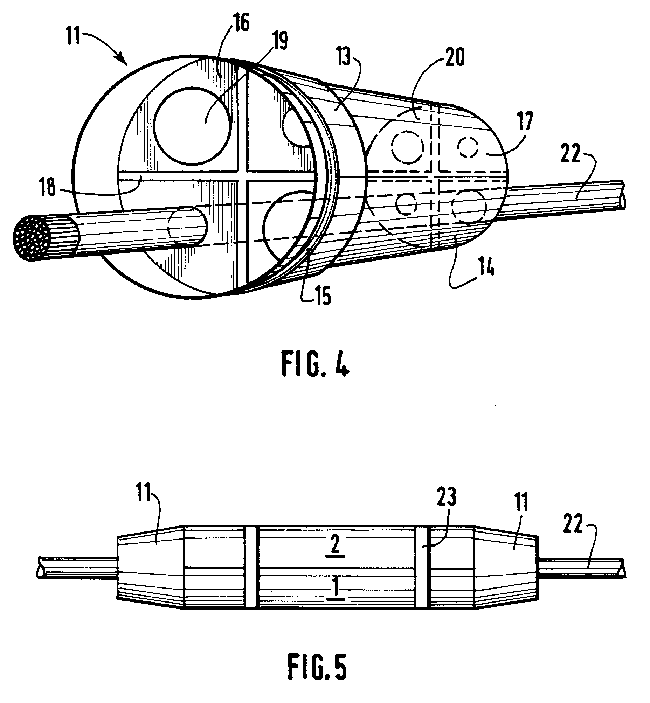

A cet effet, la coquille est fermée à chacune de ses extrémités par un embout 11 tel que celui qui est représenté sur la figure 4. Un embout 11 comprend, une collerette 13 venant s'assujettir à l'intérieur de la coquille se prolongeant par une jupe 14 sensiblement tronconique. La collerette 13 comporte une gorge 15 pour assurer l'étanchéité de la liaison avec la coquille 1, 2 au moyen d'un joint torique. L'embout 11 comporte un flasque avant 16 au niveau de la partie arrière de la collerette et un flasque arrière 17. Les deux flasques comprennent des croisillons 18 et, entre ces croisillons, des prédécoupes circulaires 19, au nombre de quatre dont les diamètres sont différents de manière à permettre le passage et le maintien de câbles de diamètres variables. Le câble est ainsi maintenu par contact dans une ou plusieurs des ouvertures 19. Un trou 20 permet l'injection d'une mousse plastique dans l'embout ce qui bloque définitivement le câble et assure l'étanchéité par rapport à l'extérieur. On a schématisé sur la figure 4 un câble d'entrée 22 passant par l'une des paires de prédécoupes disposées en regard l'une de l'autre.

La figure 5 représente schématiquement un dispositif de connexion après fermeture, le blocage de celle-ci étant assurée par des liens 23 tels que des colliers en RILSAN. ( Marque déposée)

Pour la préparation du câblage, après ouverture de la coquille par pivotement selon la flèche F1, de la demi-coquille 2, on fait pivoter le plateau 3 selon la flèche F2. Après insertion des fils à connecter dans les connecteurs 7, ce qui provoque la coupe et le dénudage des extrémités, on pousse les connecteurs 7 dans les modules 6 ce qui réalise les connexions. Après quoi, on glisse les modules 6 sur le plateau 3 et l'on referme la coquille, cette fermeture étant verrouillée par exemple par des colliers en RILSAN.

La présente invention permet notamment la réalisation d'épissures normalisées en soulageant l'installateur d'un travail de repérage fastidieux.

## Revendications

1. Dispositif de raccordement et de protection de câbles comprenant, une coquille, constituée de deux demi coquilles (1,2) articulées l'une sur l'autre, fermée à ses deux extrémités par des flasques (16,17), caractérisé en ce qu'il inclût au moins un plateau (3) solidaire de la demi-coquille inférieure (1) recevant des modules de connexion (6), chaque module (6) recevant une pluralité de connecteurs (7) dans lesquels sont introduites des paires de fils conducteurs des câbles à raccorder.

2. Dispositif selon la revendication 1, caractérisé en ce que les flasques (16,17) présentent des opercules (19) détachables de différents diamètres pour le passage des câbles à raccorder, recouverts par des embouts (11) de blocage des câbles dans lesquels est injectée une mousse plastique par un orifice (20).

3. Dispositif selon la revendication 1, caractérisé en ce que les connecteurs (7) sont des connecteurs auto-dénudant, regroupés par paires .

4. Dispositif selon la revendication 1, caractérisé en ce que, le plateau (3) comprend deux niveaux de connecteurs (7) insérés dans des modules (6), l'ensemble étant articulé sur la demi coquille inférieure par une charnière (21) et reposant, de l'autre coté sur un support (8).

5. Dispositif selon la revendication 1, caractérisé en ce que, sur le plateau (3) fixé dans la demi coquille inférieure (2) est articulé, par une charnière (31), un second plateau (3a) articulé sur le premier, s'ouvrant vers l'intérieur de la coquille.
